# EUROPEAN PATENT SPECIFICATION

(11) **EP 0 576 086 B1**
(45) Date of publication and mention of the grant of the patent: **26.08.1998**
(21) Application number: 93201777.5
(22) Date of filing: 21.06.1993
(51) Int. Cl.: A01J 7/00, A01K 1/12, A01J 5/007

(54) **A construction for automatically milking animals, such as cows**
Vorrichtung zum automatischen Melken von Tieren, wie zum Beispiel Kühen
Dispositif de traite automatique d'animaux, par exemple des vaches

(30) Priority: 25.06.1992 NL 9201128
(43) Date of publication of application: 29.12.1993
(60) Divisional application: 98200488.9
(73) Proprietor: C. van der Lely N.V., NL-3155 PD Maasland (NL)
(72) Inventor: van der Lely, Cornelis, CH-6300 Zug (CH)
(74) Representative: Mulder, Herman

(56) References cited:
- EP-A- 0 050 514
- EP-A- 0 323 444
- GB-A- 2 218 888
- US-A- 4 819 149
- WHAT'S NEW IN FARMING vol. 15, no. 5, February 1992, LONDON,GB pages 10 - 12 , XP283092 S. VALE 'PARLOUR MAIDS'
- LANDBOUWMECHANISATIE vol. 40, no. 6, June 1989, WAGENINGEN,NL pages 54 - 55 , XP000026204 'DE MELKROBOT - ONTWIKKELINGEN IN EUROPA'
- DATABASE WPIL Week 8315, Derwent Publications Ltd., London, GB; AN 83-E8770K & GB-A-2 106 584 (BRITAX-EXCELSIOR LT) 13 April 1983
- DATABASE WPIL Week 9204, Derwent Publications Ltd., London, GB; AN 92-026796 & GB-A-2 246 061 (WEST) 2 January 1992
- DATABASE WPIL Week 9105, Derwent Publications Ltd., London, GB; AN 92-030575 & EP-A-410 141 (SCHMALBACH LUBECA AG) 30 January 1991
- DATABASE WPIL Week 8523, Derwent Publications Ltd., London, GB; AN 85-136481 & EP-A-143 623 (MARS INC) 5 June 1985

## Description

The invention relates to a construction for automatically milking animals, such as cows, comprising a milking robot including milking means, as well as a computer with a display screen, the construction including a plurality of exchangeable parts provided with means for sensing when the exchangeable parts are not functional and for signalling the condition to the computer.

Such a construction is known from GB-A-2218888.

From this construction it is not clear how it operates in the event of a fault being detected in parts of the construction.

A construction for automatically milking animals, including a milking robot, must satisfy very high requirements, since the milking robot operates for the largest part of the time without human supervision. If the user notices a malfunctioning only after a few hours or does not notice it at all, this may have serious consequences for the milking and the health of the animals.

The invention has for its object to provide a construction in which the aforesaid disadvantages do not occur or are at least obviated to a significant extent.

For that purpose, the construction according to the invention is characterized in that on the basis of the sensed condition, the display screen displays which part is out of order, while the construction includes means for indicating whether a disturbance in the construction reported on the display screen is serious or not so serious and the exchangeable parts are provided in the construction by means of one or a plurality of quick couplings.

Thus, the user is informed via the screen that a given part of the milking implement does not function properly and whether this causes a serious or not so serious disturbance in the construction. Also a disturbance which cannot be noticed with the eye becomes immediately visible to the user. Consequently, the user can act rapidly and accurately in an early stage of the disturbance. Furthermore, this renders it possible to replace rapidly a faulty part.

In accordance with a preferred feature of the invention, the signalling means of the exchangeable parts are provided with characters, such as letters or figures, which characters are also stored in a memory of the computer, and are also provided on the relevant exchangeable part of the construction, while the characters are also shown in a diagram of the exchangeable parts. This renders it possible to rapidly track the faulty exchangeable part, which significantly shortens the time of repair.

In accordance with a further preferred feature of the invention the computer is in connection with a telephone or a suchlike apparatus, so that with the aid of the computer a remotely located service department can be informed of any disturbance occurring in a given part of the construction; an indication in which plant the disturbance occurs is then also given.

This has the advantage that the service department is directly informed of the fact that a given part of a milking implement does not function properly. The service engineer can then request further data via a display screen and consult with the local operator whether and how the disturbance can be eliminated as rapidly as possible.

In a preferred embodiment, the display screen or similar information display device for reporting the defects and/or disturbances is located outside the farm buildings, e.g. in a house. Outside the normal working hours, the user can check from his home whether the milking implement still functions appropriately.

In accordance with a still further preferred feature of the invention, the signalling means are provided on separate, easily removable circuit boards and the signalling means apply a signal to the computer when the circuits get out of order, whereafter the display screen indicates which circuit has broken down. The faulty circuit can then easily be removed from the mother board and be replaced by a new circuit. In accordance with a further preferred feature of the invention, the exchangeable parts carry numbers, so that the parts can rapidly be tracked down in the construction. Preferably, the parts of the milking robot may be provided with numbers in accordance with a list stated herebelow, which numbers are also stored in the computer memory.

A construction in accordance with the invention may include a list of the following numbers:
1) a railing round the cow
2) a frame which is movable in the longitudinal direction of the milking box
3) a part which moves in a horizontal plane
4) teat cups with carrier member
5) tubes and holders for the teat cups
6) operating cylinders (pneumatic and/or hydraulic cylinders)
7) valve blocks
8) control cable and control tubes for electronics, pneumatics and/or hydraulics
9) sensors
10) laser
11) teat cleaner
12) teat cup cleaner
13) mastitis sensor
14) milk meter
15) milk glass
16) computer for process control of robot with display screen
17) keyboard
18) circuits for different functions
19) transponder attached to the animal's collar
20) computer for data and handling with display screen
21) telephone
22) modem.

For a better understanding of the invention and to show how the same may be carried into effect, reference will now be made, by way of example, to the accompanying drawings, in which:
Figure 1 is a plan view of a first embodiment of the construction in accordance with the invention, in which the teat cups of the milking robot have been moved to under an animal present in the milking parlour;
Figure 2 is a plan view of a second embodiment of the construction in accordance with the invention, in which a second milking cluster has been moved to under an animal present in the milking parlour;
Figure 3 is a side view of the construction shown in Figure 2;
Figure 4 is, to an enlarged scale, a view of an exchangeable part of the construction in accordance with FIgures 1 to 3;
Figure 5 is, to an enlarged scale, a view of a further exchangeable part of the construction of Figures 1 to 3, and
Figure 6 is a side view taken in the direction of the arrow VI in Figure 5.

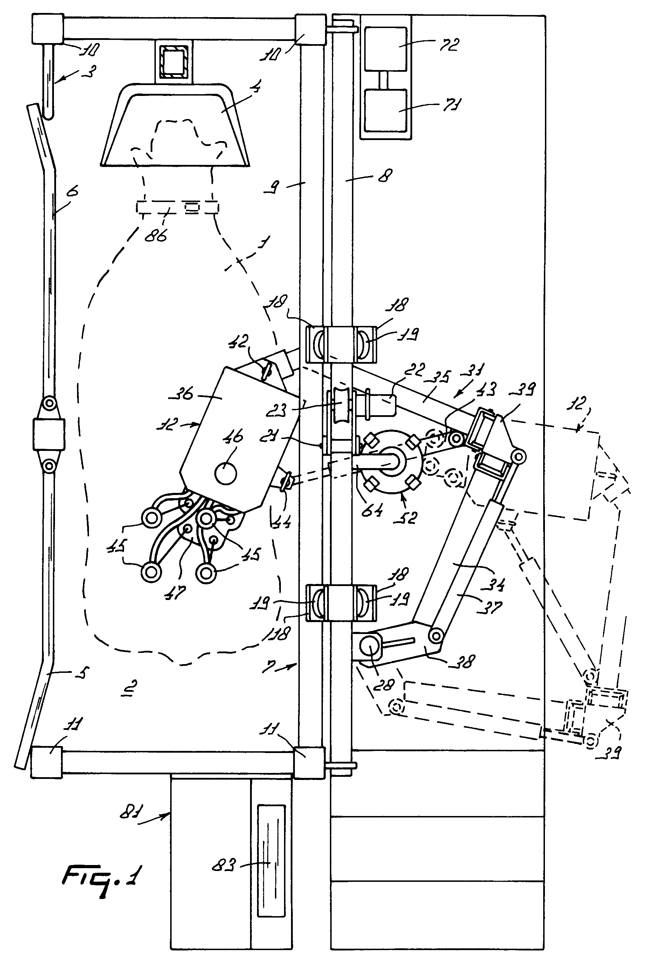

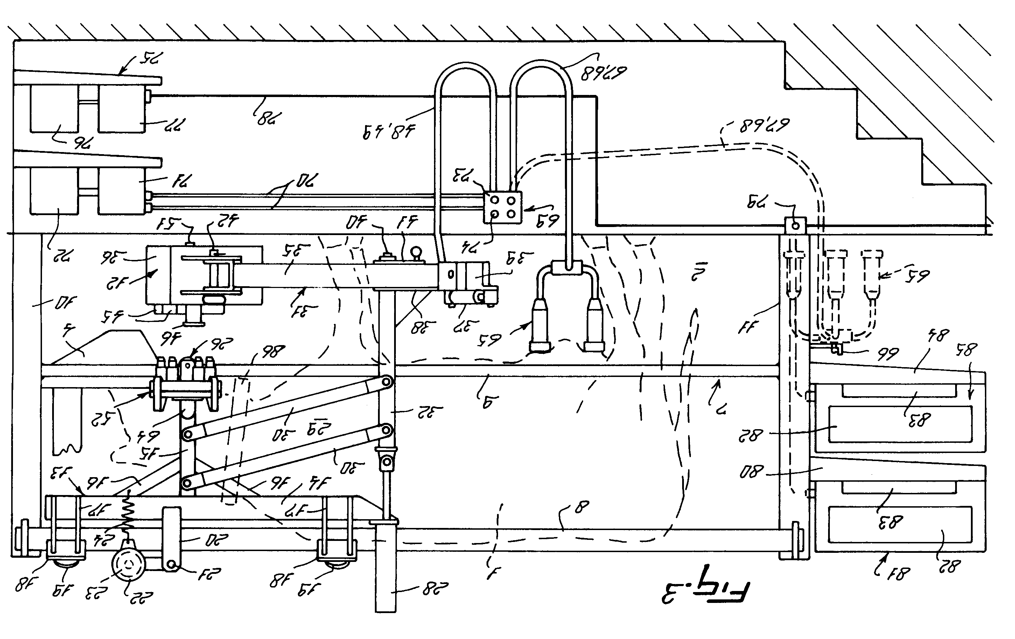

In the plan view of the construction shown in Figure 1, a cow 1 is shown which is standing in a milking parlour 2, which milking parlour 2 is surrounded by a railing 3, which gives the cow 1 a limited freedom of movement. The milking parlour 2 can be entered by the cow 1 from the side at the rear, while the cow 1 can leave the milking parlour 2 again from this side at the front. As the front side of the milking parlour 2 is equipped with a feeder implement 4, the cow 1 will advance sufficiently far and arrive in a position in which she can easily be milked. At the longitudinal side of the milking parlour 2 other than the one at which the entrance 5 and the exit 6 are located, a portion of a rigidly arranged frame 7 which forms part of the railing 3 (Figure 3) is accommodated, which frame 7 comprises a first frame portion 8 and a second frame portion 9. The first frame portion 8 extends parallel to and is predominantly located above the second frame portion 9. The first frame portion 8 is then rigidly connected to the outer side of two vertical pillars 10 and 11 which form part of the railing 3, whilst the second frame portion 9 is in a fixed position between these two pillars 10 and 11. A milking robot 12 for automatically milking animals is movably connected to the first frame portion 8, whilst this milking robot 12 bears against the second frame portion 9, which in all other respects is located at such a height that arms of the robot 12 can be moved underneath this frame portion to under the cow 1 present in the milking parlour 2. The milking robot 12 includes a carrier frame 13 for the further parts of the milking robot 12. By designing the first frame portion 8 as a rail, the carrier frame 13, and consequently the entire milking robot 12, can easily be moved along this frame portion. The carrier frame 13 comprises a beam 14 which predominantly extends parallel to the first frame portion 8, a beam 15 which is rigidly connected thereto and extends perpendicularly in the vertical downward direction, and two struts 16. Pairs of supporting elements 17 are provided near the ends of the beam 14 (Figure 3). Attached at an angle of approximately 45° to each pair of supporting elements 17 by means of supporting plates 18 rigidly connected thereto there are two rollers 19 which form a roller element pair, the arrangement being such that the carrier frame 13 is suspended from the first frame portion 8 and is easily movable therealong. Two carriers 20 are accommodated on both sides of the beam 14 of the carrier frame 13. A motor 22 is secured to these carriers 20, capably of pivoting about a pivot shaft 21. This motor 22 drives a roller 23 which preferably has a rubber surface, which roller 23 is pushed by means of a spring member 24 against the first frame portion 8. Since the spring member 24 acts between the motor 22 and the carrier frame 13, the roller 23, which is to be driven by the motor 22, is maintained in the position in which it presses against the first frame portion 8, so that, when the motor 22 is driven, it is moved along the first frame portion 8 in the longitudinal direction, taking the entire carrier frame 13 with it.

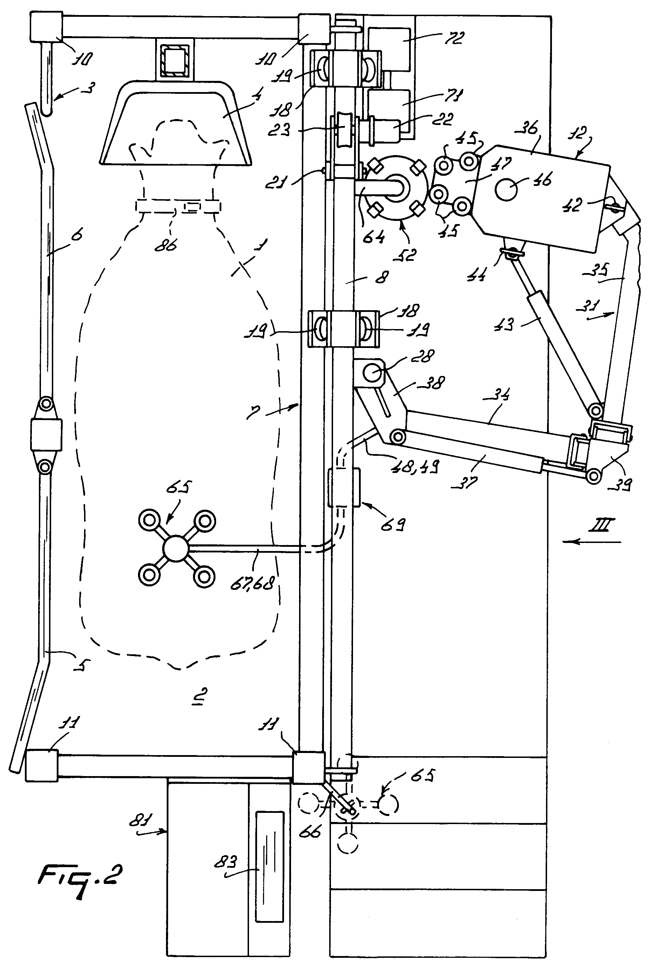

In the present embodiments, the beam 15 of the carrier frame 13 extends vertically downwardly to just below the second frame portion 9. A freely pivotal roller element 26 is provided at the bottom side of this beam 15. The second frame portion 9 is constituted by a rail, and more specifically by a rail in the form of a U-shaped beam, the freely pivotal roller element 26 being accommodated such that it is movable between the two upright edges of the U-shaped beam. Thus, the milking robot 12 bears against the second frame portion 9 and, when the milking robot 12 is moved over the first frame portion 8 by the motor 22, the milking robot can easily move along the second frame portion 9. In addition to the carrier frame 13, the milking robot 12 includes a robot arm construction 31 (Figure 2) which is movable by means of an operating cylinder 28 in a predominantly vertical direction relative to the carrier frame 13. The robot arm construction 31 is movably connected to the carrier frame 13 by means of a four-bar linkage construction 29. The four-bar linkage construction 29 includes two parallel and spaced-apart arms 30 of equal length. The robot arm construction 31 comprises a substantially vertical robot arm 32, as well as in a substantially horizontal plane movable robot arms 34, 35, 36. The vertical robot arm 32 is connected with the beam 15 of the carrier frame 13 by the four-bar linkage construction 29. The operating cylinder 28 is operative between the carrier frame 13 and the vertical robot arm 32. In the present embodiments, the operating cylinder is a servo-pneumatic positioning cylinder.

As is shown in Figure 2, the milking robot 12 comprises robot arms 34, 35 and 36. The arms 34 and 35 are disposed at a fixed angle of 90° relative to each other. The arms 34 and 35 are therefore moved in conjunction, more specifically by an operating cylinder 37 which is arranged between a supporting plate 38 connected to the vertical robot arm 32 and a connecting member 39 provided between the two robot arms 34 and 35. The two robot arms 34 and 35 are pivotal about a predominantly vertical pivot shaft 40 between the supporting plate 38 and a supporting plate 41, the latter being also rigidly connected to the vertical robot arm 32, more in particular to the bottom end thereof.

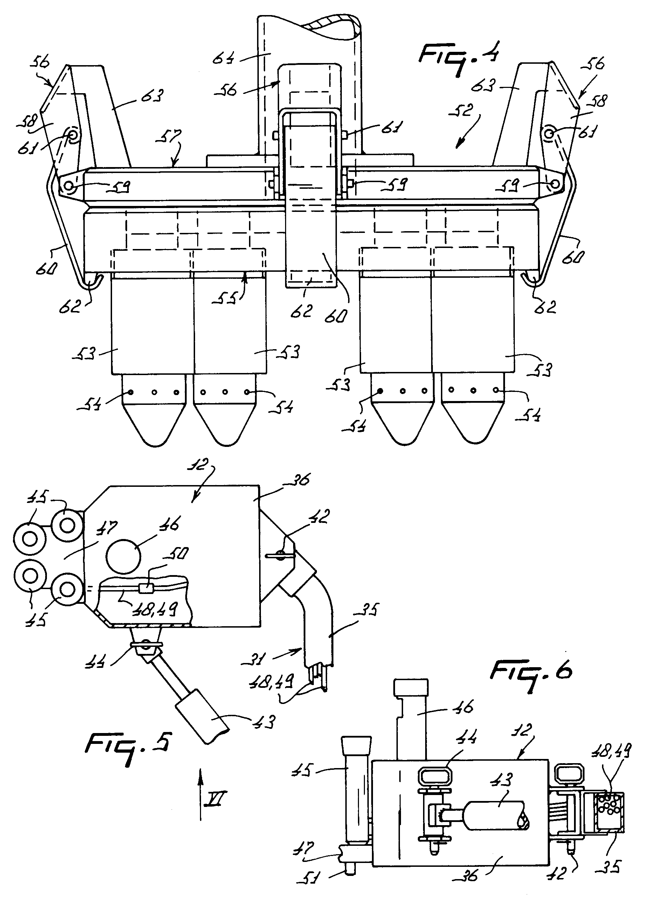

The robot arm 36 is pivotal relative to the robot arm 35 about a predominantly vertical pivot shaft 42 and is rotated relative to this shaft 42 by means of an operating cylinder 43 disposed between the robot arm 36 and that end of the robot arm 35 that is located near the connecting member 39. As is shown in Figures 5 and 6, the vertical pivot shaft 42 is designed as a removable pin with a handle and a locking pin. The operating cylinder 43 is also connected to the robot arm 36 via a detachable pin 44 provided with a handle. By removing the pin 42 and the pin 44, the robot arm 36 can rapidly and simply be decoupled from the robot arm 35. This is in particular advantageous, when the arm 36 must be replaced, for example, because it is out of order and cannot rapidly be repaired. The teat cups 45 which are connectable to the teats of the cow 1 are located near the end of the robot arm 36. The arm 36 is further provided with a sensor 46, which by performing a sector-by-sector scanning motion can accurately determine the position of the teats of the cow 1, whereby the operating cylinders 28, 37 and 43 can be controlled such by means of the computer that the teat cups 45 can be connected in the proper manner to the teats. In the rest position the teat cups 45 as shown in Figure 6, are kept against the carrier member 47 of the robot arm 36 by (non-shown) cylinders. In an alternative embodiment, not shown, the teat cups 45 can be kept against the carrier member 47 by means of electromagnets. Milk lines 48 and air lines 49 are connected to the teat cups 45. The milk lines 48 and the air lines 49 include, as is shown in Figure 5, sensors 50 for monitoring the milk flow and the air flow. In addition, mastitis sensors, not further shown, are incorporated in the milk lines 48, with the aid of which the milk production can be inspected. The bottom side of the carrier member 47 is provided with a sensor 51, which produces a signal when the carrier member 47 comes into contact with the floor of the milking parlour 2. To prevent the carrier member 47 from being contaminated or damaged on contact with the floor, the operating cylinder 28 is energized immediately after the sensor 51 has supplied the signal, so that the arm 36 is immediately retracted upwardly.

A cleaning device 52 for cleaning the teat cups 45 is accommodated at the bottom side of the beam 15 of the carrier frame 13. In Figure 4 this cleaning device 52 is shown to an enlarged scale. The cleaning device 52 comprises four spray caps 53 which at their bottom sides are provided with perforations 54. The spray caps 53 are accommodated remote from each other in a first lid-shaped housing 55. The first housing 55 is clamped on a second box-like housing 57 by means of four quick couplings 56. The quick coupling 56 includes a handle 58 which is connected to the second housing 57 by means of a horizontal pivot shaft 59. Attached to the handle 58 is a strip 60 which is made of resilient material and can rotate about a horizontal shaft 61 relative to the handle 58. The bottom side of the strip 60 is folded such as to form a hook, the arrangement being such that the folded piece of strip can co-operate with an edge 62 on the first housing 55. On the second housing 57 there are four stops 63, against which the upper side of the handle 58 bears when the first housing 55 and the second housing 57 are clamped up against each other by means of the quick couplings 56. In addition, there is connected to the second housing 57 a line 64, through which the rinsing and/or cleaning liquid for the teat cups can be passed. Cleaning the teat cups 45 is effected by connecting them to the spray caps 53 and by thereafter forcing rinsing liquid through the perforations 54. Should a blockage or a fault occur in the cleaning device 52, then the cleaning device 52 can rapidly be taken apart by means of the quick couplings 56, whereafter the separate parts of the cleaning device 52 are easily accessible and/or replaceable.

In the embodiment shown in Figures 2 and 3, the construction includes, in addition to a first set of teat cups 45 for automatically milking animals, a further second set of teat cups 65. In the rest position, as is shown in Figure 3 by means of broken lines, the second milking cluster 65 is suspended from a hook 66 attached to the upright 11. The second milking cluster 65 includes a milk line 67 and an air line 68, which are connected to a valve block 69. Connected to the valve block 69 there are also the milk line 48 and the air line 49 of the first milking cluster 45. In addition, two air lines 70 are connected to the valve block 69, whose other ends are connected to an air pump 71. The air pump 71 is driven by a motor 72 and then produces the required vacuum for milking. The valve block 69 is further provided with switching means, with the aid of which a choice can be made between energization of the first set of teat cups 45 or the second set of teat cups 65. The switching means comprise, as is shown in Figure 3, a panel 73 on which there are a plurality of switches 74. Using the switches 74, the construction can be switched from automatic milking to manual milking. By throwing the switches 74, the air flow and the milk flow in the milk lines 48 and the air lines 49 of the first set of teat cups 45 are interrupted, while the air lines 70 are connected to the air line 68 of the second set of teat cups 65. The milk line 67 of the second set of teat cups 65 is coupled during the switching operation to a (non-shown) milk discharge line. After the switching procedure has ended, the user can manually connect the second set of teat cups 65 to the cow (Figure 3), whereafter milking can start. By moving for the purpose of manual milking the robot arm construction 31 over the straight guide 8 towards the feeder implement 4, the robot arm construction 31 hardly causes any obstruction during manual connection of the second set of teat cups 65. The second set of teat cups 65 is more in particular usable then when the milking robot 12 is out of order or is overhauled, as then the milking operation can be continued with the second set of teat cups 65.

In an alternative embodiment, not shown, the second set of teat cups 65 is disposed on a supporting arm. The supporting arm can then be designed, for example, as an arm assembled from parts, which parts are hingeable relative to each other.

The construction further includes an emergency device 75, which serves as an energy source when the construction cannot utilize the electricity from the power mains. In the embodiments, the emergency device 75 is a battery 76. The battery 76 is connected to a battery charging station 77, by means of which the battery 76 is charged and kept in condition. The battery charging station 77 is connected to the power mains via an electric lead 78. It will be obvious that the emergency device 75 is not limited to a battery, but may alternatively be in the form of a current generating set. The emergency device 75 further includes a push button 79 located near the upright 11 and with the aid of which the emergency device 75 can be activated.

A further computer 81 is attached to the upright 11 by means of a first support 80. The further computer 81 includes a picture display screen 82 and a keyboard 83. Below the further computer 81, a computer 85 is attached to the upright 11 by means of a second support 84. The computer 85 also includes a picture display screen 82 and a keyboard 83. The computer 85 is used for processing animal and management data, such as cow identification, mastitis detection, milk production check, etc.. The computer 85 processes, for example, data received from the cow identification collar 86, from a (non-shown) mastitis detector, and from a milk production checking sensor. In addition, there are connected to the computer 85 signalling means, with the aid of which it is checked whether a given exchangeable part is out of order. An example thereof are the sensors 50, by means of which it is checked whether the air lines 49 and the milk lines 48 are free from leaks. Thus, sensors, by means of which it can be checked whether the relevant part functions adequately, may also be included in the operating cylinders 28, 37, 43 and the laser 46. If a certain part of the construction does not or not adequately function, then the relevant sensor applies a signal to the memory of the computer 85, whereafter an error message for the relevant part appears on the picture display screen 82. The error message is accompanied by a number corresponding to a number provided on the relevant exchangeable part. By repairing or replacing the faulty exchangeable part, the error message is cancelled and the milking operation can be resumed. The error message can in this situation also be passed on to a service department via a (non-shown) modem. Via the modem, this service department can communicate with the computer 85 and thus ask for further data and discuss with the local operator whether and how the disturbance can be eliminated as soon as possible. The computer 85 is further provided with (non-shown) switching means, with the aid of which less vital parts and/or tasks of the milking robot 12 can be switched off either manually or automatically. If, for example, a fault in the mastitis detector is found, then the computer 85 automatically switches off the mastitis detection, so that the milk production can be continued in the normal way without the milk being checked for mastitis. The user is of course informed via the display screen 82 of the fact that the mastitis detector is out of order. In the event of a power cut, the computer 85 automatically triggers the emergency device 75 with the aid of the switching means.

The further computer 81 of the construction is designed as a process computer. The process computer 81 controls inter alia the operating cylinders 28, 37 and 43 of the robot arm construction 31 and the cylinders by means of which the first teat cups 45 are retained on the carrier member 47. In addition, the process computer 81 controls inter alia the valve block 69, the air pump 71, the cleaning device 52 and the motor 22. The process computer 81 also processes the data received from the laser 46.

A number of processes can be made inoperative via the keyboard 83 of the further computer 81. This is particularly advantageous for the case in which, for example, one of the cylinders of the robot arm construction 31 is out of order and a substitute cylinder is not rapidly available. The user can then switch over the milking robot 12 with the aid of the keyboard 83 to a manually operable milking implement. The user then, for example, de-energizes the laser 46, as well as the operating cylinders 37, 43 and the motor 22. Using the keyboard 83 of the further computer 81, the user can thereafter readjust the operating cylinders 28 such that the first teat cups become located below the level of the teats of the cow 1. Thereafter, as is shown in Figure 1, the user can pivot the robot arm structure 31 from the position indicated by broken lines about the pivot shaft 40 to under the cow 1 (the position indicated by the solid lines). By temporarily switching off the cylinders by means of which the first teat cups 45 are pulled up against the carrier member 47, it becomes possible to connect manually the first teat cups 45 to the teats of the cow 1, whereafter milking can be started. The automatic decoupling of the first teat cups 45 can, just as previously during automatic milking, be effected automatically by energizing the cylinders of the first teat cups 45.

Both the further computer 81 and the computer 85 are provided with (non-shown) printed circuits. The printed circuits are inserted by means of a rapidly decouplable connection on a mother board. The printed circuits comprise signalling means which apply a signal to the memory of the relevant computer 81, 85, in the case of a malfunctioning of the relevant printed circuit. An error message of the relevant printed circuit then appears on the picture display screen of the computer 81, 85, whereafter the user can repair or replace the printed circuit.

## Claims

1. A construction for automatically milking animals, such as cows, comprising a milking robot including milking means, as well as a computer (85) with display screen (82), the construction including a plurality of exchangeable parts provided with means for sensing when the exchangeable parts are not functional and for signalling the conditions to the computer (85), characterized in that on the basis of the sensed condition, the display screen (82) displays which part is out of order, while the construction includes means for indicating whether a disturbance in the construction reported on the display screen (82) is serious or not so serious and the exchangeable parts are provided in the construction by means of one or a plurality of quick couplings (44, 56).

2. A construction as claimed in claim 1, characterized in that the signalling means of the exchangeable parts are provided with characters, such as letters or figures, which characters are also stored in a memory of the computer (85) , and are also provided on the relevant exchangeable part of the construction, whilst the characters are also shown in a diagram of the exchangeable parts.

3. A construction as claimed in claims 1 or 2, characterized in that the computer (85) is in connection with a telephone or a similar apparatus, and that with the aid of the computer a remote service department can be informed that in a given part of the construction a disturbance has occurred, and also in which plant the disturbance occurs.

4. A construction as claimed in any one of the preceding claims, characterized in that the display screen (82) or a similar information display for reporting the faults and/or disturbances is arranged outside the farm buildings, e.g. in a dwelling house.

5. A construction as claimed in any one of the preceding claims, characterized in that the signalling means are applied on separate, easily detachable circuit boards, and that the signalling means apply a signal to the computer (85) when the circuits get out of order, so that it is displayed on the display screen (82) which circuit is faulty.

6. A construction as claimed in any one of the preceding claims, characterized in that the exchangeable parts are provided with numbers.

7. A construction as claimed in any one of the preceding claims, characterized in that the quick coupling includes a locking pin (44) with handle.

8. A construction as claimed in any one of claims 1 to 6, characterized in that the quick coupling is in the form of a bayonet catch (56) .

9. A construction as claimed in any one of claims 1 to 6, characterized in that the quick coupling is in the form of a clamp.

10. A construction as claimed in claim 6, characterized in that the construction comprises at least ten exchangeable parts.

11. A construction as claimed in claim 10, characterized in that the exchangeable parts are predominantly the mechanical components of the construction.

12. A construction as claimed in any one of claims 1 to 10, characterized in that the exchangeable parts are predominantly the electronic components of the construction, such as sensors (46, 50, 51) and a laser (46) device for determining the position of the teats of the animal to be milked.

13. A construction as claimed in claim 12, characterized in that a number of electronic components are formed by circuits.

14. A construction as claimed in any one of the preceding claims, characterized in that the construction includes a further computer (81) which primarily controls a control system of the milking robot (12) .

15. A construction as claimed in any one of the claims, characterized in that the computer (85) is primarily used for processing the animal and management data.

16. A construction as claimed in claims 14 and 15, characterized in that the computer (85) and the further computer (81) predominantly operate independently of each other.

17. A construction as claimed in any one of the preceding claims, characterized in that the computer (85) is connected to the public telephone system via a modem.

18. A construction as claimed in any one of the preceding claims, characterized in that the signalling means incorporate one or a plurality of red lamps, by means of which the seriousness of the disturbance can be indicated.

19. A construction as claimed in any one of the preceding claims, characterized in that the signalling means include a tone generator, by means of which the seriousness of the disturbance can be indicated.

20. A construction as claimed in any one of the preceding claims, characterized in that the milking robot (12) includes a teat cup carrier member (47), which is equipped with a sensor (51) which applies a signal to the computer (81) when the teat cup carrier member (47) comes into contact with the milking parlour floor.

## Patentansprüche

1. Anordnung zum automatischen Melken von Tieren, wie z. B. von Kühen, die einen Melkroboter mit Melkeinrichtungen sowie einen Computer (85) mit einem Bildschirm (82) aufweist, wobei die Anordnung mehrere austauschbare Teile hat, die mit einer Vorrichtung zum Ermitteln von Defekten der austauschbaren Teile sowie mit einer Vorrichtung zum Übermitteln der Zustände an den Computer (85) versehen sind,
dadurch gekennzeichnet, daß der Bildschirm (82) auf der Basis des ermittelten Zustandes anzeigt, welches Teil defekt ist, wobei die Anordnung eine Vorrichtung zum Anzeigen aufweist, ob eine auf dem Bildschirm (82) angezeigte Störung innerhalb der Anordnung erheblich oder weniger erheblich ist, und wobei die austauschbaren Teile in der Anordnung mittels einer oder mehrerer Schnellkupplungen (44, 56) angebracht sind.

2. Anordnung nach Anspruch 1,
dadurch gekennzeichnet, daß die Übermittlungsvorrichtung der austauschbaren Teile mit Zeichen, wie z. B. Buchstaben oder Zahlen, versehen ist, die auch in einem Speicher des Computers (85) gespeichert und auf dem entsprechenden austauschbaren Teil der Anordnung angebracht sind, wobei die Zeichen ebenfalls in einem Diagramm der austauschbaren Teile gezeigt sind.

3. Anordnung nach Anspruch 1 oder 2,
dadurch gekennzeichnet, daß der Computer (85) mit einem Telefon oder ähnlichen Gerät verbunden ist, und daß mit Hilfe des Computers ein entfernter Kundendienst davon zu unterrichten ist, daß bei einem bestimmten Teil der Anordnung eine Störung aufgetreten ist, und in welcher Anlage die Störung auftritt.

4. Anordnung nach einem der vorhergehenden Ansprüche,
dadurch gekennzeichnet, daß der Bildschirm (82) oder eine ähnliche Informationseinrichtung zum Anzeigen der Defekte und/oder Störungen außerhalb der Wirtschaftagebäude, beispielsweise in einem Wohnhaus angeordnet ist.

5. Anordnung nach einem der vorhergehenden Ansprüche,
dadurch gekennzeichnet, daß die Übermittlungsvorrichtung auf getrennten, leicht lösbaren Leiterplatten angeordnet ist, und daß die Übermittlungseinrichtung ein Signal an den Computer (85) übermittelt, wenn die Schaltungen defekt sind, so daß auf dem Bildschirm (82) angezeigt wird, welche Schaltung defekt ist.

6. Anordnung nach einem der vorhergehenden Ansprüche,
dadurch gekennzeichnet, daß die austauschbaren Teile mit Nummern versehen sind.

7. Anordnung nach einem der vorhergehenden Ansprüche,
dadurch gekennzeichnet, daß die Schnellkupplung einen Verriegelungsstift (44) mit Griff aufweist.

8. Anordnung nach einem der Ansprüche 1 bis 6,
dadurch gekennzeichnet, daß die Schnellkupplung als Bajonettkupplung (56) ausgeführt ist.

9. Anordnung nach einem der Ansprüche 1 bis 6,
dadurch gekennzeichnet, daß die Schnellkupplung als Klammer ausgeführt ist.

10. Anordnung nach Anspruch 6,
dadurch gekennzeichnet, daß die Anordnung mindestens zehn austauschbare Teile aufweist.

11. Anordnung nach Anspruch 10,
dadurch gekennzeichnet, daß die austauschbaren Teile im wesentlichen die mechanischen Bauteile der Anordnung sind.

12. Anordnung nach einem der Ansprüche 1 bis 10,
dadurch gekennzeichnet, daß die austauschbaren Teile im wesentlichen die elektronischen Bauteile der Anordnung sind, wie z. B. Sensoren (46, 50, 51) und ein Laser (46) zum Ermitteln der Lage der Zitzen des zu melkenden Tieres.

13. Anordnung nach Anspruch 12,
dadurch gekennzeichnet, daß eine Anzahl elektronischer Bauteile aus Schaltungen besteht.

14. Anordnung nach einem der vorhergehenden Ansprüche,
gekennzeichnet durch einen weiteren Computer (81), der hauptsächlich ein Steuersystem des Melkroboters (12) steuert.

15. Anordnung nach einem der vorhergehenden Ansprüche,
dadurch gekennzeichnet, daß der erste Computer (85) hauptsächlich zum Verarbeiten der tier- und verwaltungsbezogenen Daten verwendet wird.

16. Anordnung nach den Ansprüchen 14 und 15,
dadurch gekennzeichnet, daß der erste Computer (85) und dar weitere Computer (81) im wesentlichen unabhängig voneinander arbeiten.

17. Anordnung nach einem der vorhergehenden Ansprüche,
dadurch gekennzeichnet, daß der erste Computer (85) über ein Modem mit dem öffentlichen Telefonnetz verbunden ist.

18. Anordnung nach einem der vorhergehenden Ansprüche,
dadurch gekennzeichnet, daß die Übermittlungsvorrichtung eine oder mehrere rote Lampen aufweist, mittels welcher der Grad der Störung anzeigbar ist.

19. Anordnung nach einem der vorhergehenden Ansprüche,
dadurch gekennzeichnet, daß die Übermittlungsvorrichtung einen Tongenerator aufweist, mittels dessen der Grad der Störung anzeigbar ist.

20. Anordnung nach einem der vorhergehenden Ansprüche,
dadurch gekennzeichnet, daß der Melkroboter (12) einen Zitzenbecherhalter (47) mit einem Sensor (51) aufweist, der ein Signal an den Computer (81) liefert, wenn der Zitzenbecherhalter (47) in Kontakt mit dem Melkstandboden kommt.

## Revendications

1. Dispositif de traite automatique d'animaux, tels que des vaches, comprenant un robot trayeur comportant des moyens de traite, ainsi qu'un ordinateur (85) avec écran d'affichage (82), le dispositif comportant une pluralité de pièces interchangeables munies de moyens pour détecter quand les pièces interchangeables ne sont pas fonctionnelles et pour signaler les situations à l'ordinateur (85),
**caractérisé** en ce que, d'après la situation détectée, l'écran d'affichage (82) indique quelle pièce est en dérangement, tandis que le dispositif comporte des moyens pour indiquer si un dérangement dans le dispositif signalé sur l'écran d'affichage (82) est grave ou bien pas tellement grave, et en ce que les pièces interchangeables sont prévues dans le dispositif au moyen d'un ou plusieurs raccords rapides (44, 56).

2. Dispositif selon la revendication 1, caractérisé en ce que les moyens de signalisation des pièces interchangeables sont munis de caractères, tels que des lettres ou des chiffres, lesquels caractères sont aussi enregistrés dans une mémoire de l'ordinateur (85), et sont aussi prévus sur la pièce interchangeable correspondante du dispositif, tandis que les caractères sont également représentés sur un schéma des pièces interchangeables.

3. Dispositif selon les revendications 1 ou 2, caractérisé en ce que l'ordinateur (85) est en liaison avec un téléphone ou un appareil similaire, et en ce que, à l'aide de l'ordinateur, un service d'entretien situé à distance, peut être informé que, dans une partie donnée du dispositif, un dérangement est survenu, en indiquant aussi dans quelle installation a lieu le dérangement.

4. Dispositif selon l'une quelconque des revendications précédentes, caractérisé en ce que l'écran d'affichage(82) ou un affichage d'information analogue pour signaler les défauts et/ou les dérangements est disposé en dehors des bâtiments de la ferme, par exemple dans une maison d'habitation.

5. Dispositif selon l'une quelconque des revendications précédentes, caractérisé en ce que les moyens de signalisation sont appliqués sur des cartes à circuits séparées, facilement amovibles, et en ce que les moyens de signalisation transmettent un signal à l'ordinateur (85) quand les circuits tombent en dérangement, de telle sorte que l'écran d'affichage (82) indique quel circuit est défectueux.

6. Dispositif selon l'une quelconque des revendications précédentes, caractérisé en ce que les pièces interchangeables sont munies de numéros.

7. Dispositif selon l'une quelconque des revendications précédentes, caractérisé en ce que le raccord rapide comporte une broche de verrouillage (44) avec poignée.

8. Dispositif selon l'une quelconque des revendications 1 à 6, caractérisé en ce que le raccord rapide est sous la forme d'une douille à bayonnette (56).

9. Dispositif selon l'une quelconque des revendications 1 à 6, caractérisé en ce que le raccord rapide est sous la forme d'un crampon.

10. Dispositif selon la revendication 6, caractérisé en ce que le dispositif comprend au moins dix pièces interchangeables.

11. Dispositif selon la revendication 10, caractérisé en ce que les pièces interchangeables sont, pour la plus grande part, les composants mécaniques du dispositif.

12. Dispositif selon l'une quelconque des revendications 1 à 10, caractérisé en ce que les pièces interchangeables sont, pour la plus grande part, les composants électroniques du dispositif, tels que des capteur (46, 50, 51) et un dispositif à laser (46) pour déterminer la position des trayons de l'animal à traire.

13. Dispositif selon la revendication 12, caractérisé en ce qu'un certain nombre de composants électroniques sont formés par des circuits.

14. Dispositif selon l'une quelconque des revendications précédentes, caractérisé en ce que le dispositif comporte un autre ordinateur (81) qui commande principalement un système de commande du robot trayeur (12).

15. Dispositif selon l'une quelconque des revendications précédentes, caractérisé en ce que le premier ordinateur (85) est utilisé principalement pour traiter les données concernant l'animal et la gestion.

16. Dispositif selon les revendications 14 et 15, caractérisé en ce que le premier ordinateur (85) et l'autre ordinateur (81) fonctionnent, pour la plus grand part, indépendamment l'un de l'autre.

17. Dispositif selon l'une quelconque des revendications précédentes, caractérisé en ce que le premier ordinateur (85) est relié au réseau téléphonique public au moyen d'un modem.

18. Dispositif selon l'une quelconque des revendications précédentes, caractérisé en ce que les moyens de signalisation comportent une ou plusieurs lampes rouges au moyen desquelles la gravité du dérangement peut être indiquée.

19. Dispositif selon l'une quelconque des revendications précédentes, caractérisé en ce que les moyens de signalisation comportent un générateur de sons, au moyen duquel la gravité du dérangement peut être indiquée.

20. Dispositif selon l'une quelconque des revendications précédentes, caractérisé en ce que le robot trayeur (12) comporte un organe porteur (47) de godets de trayons, qui est équipé d'un capteur (51) qui applique un signal à l'ordinateur (81) quand l'organe porteur (47) des godets de trayons vient en contact avec le plancher de la stalle de traite.
